# EUROPEAN PATENT SPECIFICATION

(11) **EP 3 587 147 B1**
(45) Date of publication and mention of the grant of the patent: **19.01.2022**
(21) Application number: 17897978.7
(22) Date of filing: 29.03.2017
(51) Int. Cl.: B60C 27/12, B60C 27/02

(54) **AUTOMATIC CONTRACTING AND LOCKING RATCHET WHEEL LOCK**
AUTOMATISCHES KONTRAHIERENDES UND VERRIEGELNDES SPERRRADSCHLOSS
VERROU DE ROUE À ROCHET À CONTRACTION ET VERROUILLAGE AUTOMATIQUES

(30) Priority: 23.02.2017 CN 201710100764
(43) Date of publication of application: 01.01.2020
(73) Proprietor: Hangzhou Xiaoshan Hengli Plastic Manufactuter, Hangzhou, Zhejiang 310005 (CN)
(72) Inventor: CHEN, Lijun, Hangzhou Zhejiang 310000 (CN); LIU, Yonggang, Hangzhou Zhejiang 310000 (CN)
(74) Representative: Cabinet Chaillot
(86) International application number: PCT/CN2017/078677
(87) International publication number: WO 2018/152925

(56) References cited:
- EP-A2- 1 839 914
- WO-A1-01/76895
- WO-A1-2016/024477
- WO-A1-2016/024477
- CN-U- 204 586 389
- CN-U- 206 510 702
- CN-Y- 2 552 817
- DE-A1-102014 108 902
- JP-A- 2007 261 570
- US-A1- 2012 090 751

## Description

### Technical field

This invention relates to the field of mechanical tightening, in particular to a device of wheel structure for tightening, overlapping, locking and automatically relaxing anti-skid chain.

### Background technologies

1) Now the importance of snow chains for automobiles is increasing continuously at home and abroad. More and more countries have legislated that anti-skid chains shall be installed on tires for driving in rainy days.
2) At present, there are some anti-skid chain quick-fastening devices in the international and domestic markets, but the anti-skid chain is difficult to install because the buckle device is not convenient in use, because the volume is too large and heavy to overcome the centrifugal force during driving or the self-adjusting function of anti-skid chain tension cannot be achieved. The chain loosening during the driving process of automobile leads to safety problems, and some buckles are easy to loose and cannot meet the effective use time and frequency.
3) At present, with the attention of countries around the world on driving safety, the requirements for the function of anti-skid chain of automobile have also increased.
4) As drivers pay more and more attention to safety cost, drivers and automobile manufacturers have proposed requirement for faster and easier installation and positioning and requirements for a smaller volume and faster operation of snowfield anti-skid chain buckle.
5) Existing snowfield anti-skid chain buckle for automobile tires cannot meet the requirements for quick installation of anti-skid chain and quick launch and recovery of anti-skid chain.
6) Existing anti-skid chain buckle has no waterproof function. During use, water and other impurities easily enter the inside of the device and ice to cause product failure, and the product has a short service life.

EP1839914A2 discloses a device having a rotary lever that is movable between two end positions corresponding to locking positions. A catch plate is provided between the rotary lever and annular gears, and is positioned in a housing in a torque-proof manner. The catch plate includes an outer plate and an inner plate, where the inner plate and the outer plate are deformed in a flexible manner. The inner plate or the outer plate is pressed by the rotary lever against the appropriate annular gear in the end positions.

WO2016024477A1 discloses a winding device having high safety in which an operation means is automatically switched to a position at which drawing out of the wire is prevented while the wire is being drawn out. A winding device is disclosed that controls rotational movement of a wheel, wherein a control mechanism is provided with an operation means that switches between an engagement state of a first locking tooth that prevents rotation in the direction in which a wire is drawn out and an engagement state of a second locking tooth that prevents rotation in the direction in which the wire is wound in; and a switching mechanism that, if the engagement state of the second locking tooth is to be maintained, after an operation for drawing out the wire, pushes the operation means back to a state in which the second locking tooth is engaged with a tooth part, and if the engagement state of the second locking tooth is not to be maintained, pushes the operation means back to an operation position where the engagement state of the first locking tooth is achieved, thereby shifting to a state where the first locking tooth is engaged with the tooth part.

WO2001076895A1 discloses a clamping device for a non-skid chain, comprising a housing and an actuation member which has a lock-in position in which a clamping strand which can be pulled into the housing through a housing opening can be blocked in the opposite direction to the clamping direction; and a release position in which the block is released. Said clamping strand is connected to a coiling roll inside the housing, said coiling roll being prestressed in the winding up direction and being mounted in such a way that it can rotate about its axis. A ratchet wheel with at least one associated, spring-loaded detent pawl and a second ratchet wheel with an associated, spring-loaded detent pawl are provided on the coiling roll and the two ratchet wheels are interconnected in a rotationally fixed manner. The blocking directions of the ratchet wheels are opposed and the spring-loaded detent pawls of the first or second ratchet wheel can be engaged with the corresponding ratchet wheels alternately by means of a common actuating mechanism.

DE102014108902A1 discloses a tensioning device for a non-skid chain, a tensioning strand can be retracted and wound into the housing on a winding roller pre-stressed in a winding direction. With an actuator two positions are set, each corresponding to different locking directions for the tension cord. The winding roll has a first and a second rotatably connected with it ring gear each having a spring-loaded pawl which blocks the movement of the ring gear in a respective locking direction, said the locking directions of the two pawls are opposite to each other. The pawls are brought by means of the actuator alternately disengaged from the associated sprockets, wherein the pawl of the first sprocket formed as an internal gear, via an arm through the radially outside the Winder role located actuator is actuated.

### The contents of the invention

The present invention aims to solve at least one of the related technical problems to some extent.

To this end, one purpose of this invention is to provide a buckle device, which suits the quick installation of snowfield anti-skid chain buckle of automobiles and being small in size, does not require removal of the gloves, can achieve self-adjustment of chain and self-correction of chain length and is convenient for storage. The concentration of several functions on the snowfield anti-skid buckle device of automobiles not only improves the operation efficiency but also increase the operation accuracy and achieves waterproofness.

According to the present invention, the automatic shrinking and locking ratchet wheel lock catch comprises:
a housing;
a rotating wheel: the rotating wheel is rotatably mounted on the housing;
multiple locking ratchets as well as multiple non-return grooves positioned below the multiple locking ratchets are evenly arranged on the outer peripheral wall of the rotating wheel along the circumferential direction of the rotating wheel;
an energy storage spring: the energy storage spring is coaxially sleeved in the rotating wheel; the first end of the energy storage spring is fixed to the housing, and the second end of the energy storage spring is fixed to the rotating wheel; the energy storage spring is used to normally drive the rotating wheel to rotate in the first direction;
a steel cable: the steel cable is wound around the outer peripheral wall of the rotating wheel; the first end of the steel cable is fixed to the rotating wheel and the second end of the steel cable extends out of the housing;
a locking buckle: the locking buckle is pivotally mounted on the housing; the first end of the locking buckle has locking protrusions adapted to any of the locking ratchets, while the second end has non-return protrusions adapted to any of the non-return grooves; the locking protrusions and the non-return protrusions are respectively disposed on both sides of the pivot point of the locking buckle;
a first button: the first button is coupled with the first end of the locking buckle;
a second button: the second button is coupled with the second end of the locking buckle;
when the first button is pressed, the second button bounces under the driving of the locking buckle; the locking protrusion is combined with any one of the locking ratchets, and the non-return protrusions are not disengaged from any one of the non-return grooves; the rotating wheel is allowed to rotate in the first direction and prohibited from rotating in the second direction; the steel cable is tightened;
when the second button is pressed, the first button bounces under the driving of the locking buckle; the locking protrusion is disengaged from any one of the locking ratchets, and the non-return protrusion is combined with any one of the non-return grooves; the rotating wheel is allowed to rotate in the second direction and prohibited from rotating in the first direction; the steel cable is pulled out.

The automatic shrinking and locking ratchet wheel lock catch also comprises a limit-position buckle and a spring. The first end of the spring abuts on the housing, while the second end of the spring abuts on the limit-position buckle to push the limit-position buckle to be coupled with the first end of the locking buckle, so that the locking buckle is positioned at a position where the ratchet is coupled with the rotating wheel or where the ratchet is disengaged from the rotating wheel.

Advantageously, the automatic shrinking and locking ratchet wheel lock catch also comprises a first return spring and a second return spring; the first end of the first return spring abuts on the first end of the locking buckle, while the second end of the first return spring abuts on the first button; the first end of the second return spring abuts on the housing, while the second end of the second return spring abuts on the second button.

Advantageously, the automatic shrinking and locking ratchet wheel lock catch also comprises a buckle; the buckle is coupled with the second end of the steel cable.

Advantageously, the automatic retracting and locking ratchet wheel lock catch comprises a steel cable sleeve; the steel cable sleeve is coupled with the housing; the second end of the steel cable passes through the steel cable sleeve and is coupled with the buckle.

Advantageously, the housing has a first connecting hole and a second connecting hole.

Advantageously, the buckle comprises a buckle upper cover and a buckle lower cover; the buckle upper cover is coupled with the buckle lower cover with a buckle stud.

Advantageously, the housing comprises an upper housing and a lower housing; the upper housing is coupled with the lower housing through a housing stud.

Advantageously, both the upper housing and the lower housing are made of plastic.

Advantageously, the outer peripheral wall of the rotating wheel has an annular groove; the steel cable is contained in the annular groove.

The additional aspects and advantages of the invention will be set forth in part in the following description; part of it will become manifest in the following description or be learned about through practice of the present invention.

### Description of attached figures

Figure 1 is a structural diagram of an automatic retracting and locking ratchet wheel lock catch according to an implementation embodiment of this invention;
Figure 2 is another structural diagram of the automatic retracting and locking ratchet wheel lock catch according to the implementation embodiment of this invention;
Figure 3 is an explosion structural diagram of the automatic retracting and locking ratchet wheel lock catch according to the implementation embodiment of this invention; and
Figure 4 is a service stage diagram of the automatic retracting and locking ratchet wheel lock catch according to the implementation embodiment of this invention.

### Specific implementation modes

The embodiments of the present invention are described in detail below. The examples of the embodiments are illustrated in the attached figure. The throughout same or similar reference mark numbers refer to the same or similar components or components having the same or similar functions. The embodiments described below with reference to the attached figures are intended to be interpretation of the invention and shall not be construed as limit to the invention.

The automatic retracting and locking ratchet wheel lock catch according to the embodiment of this invention will be described in detail below with reference to the attached figures.

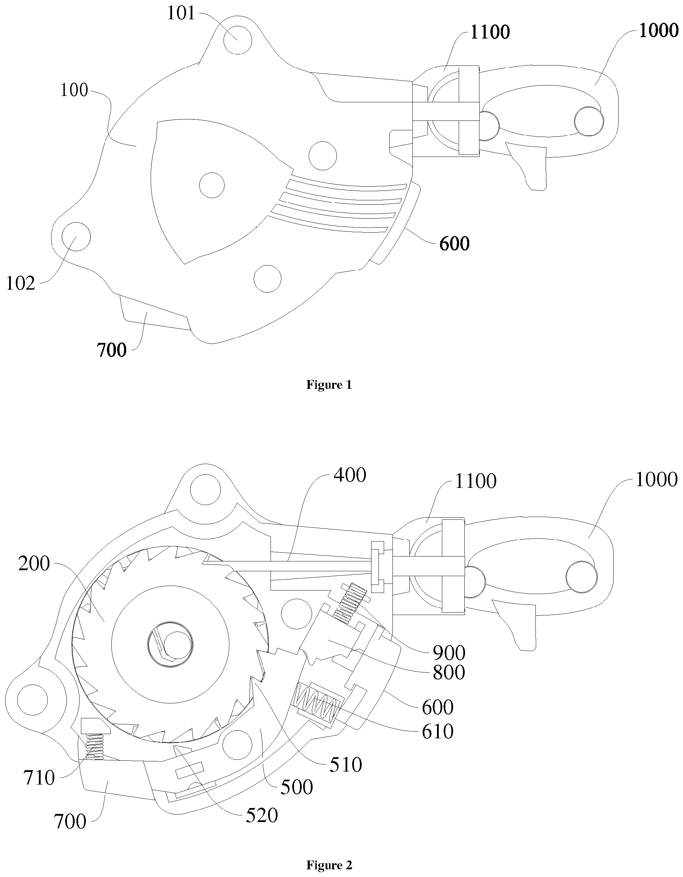

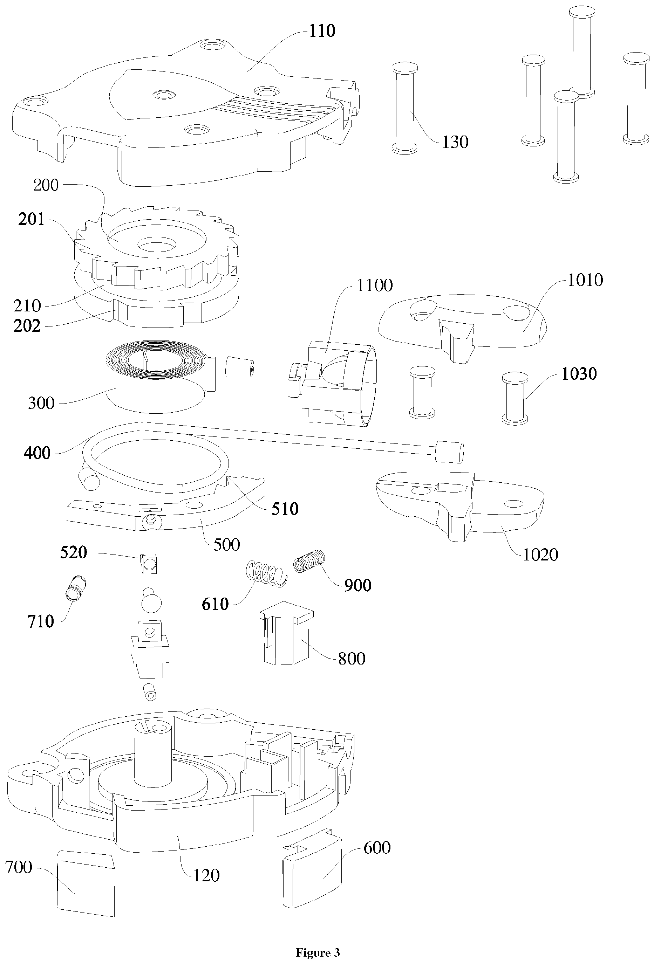

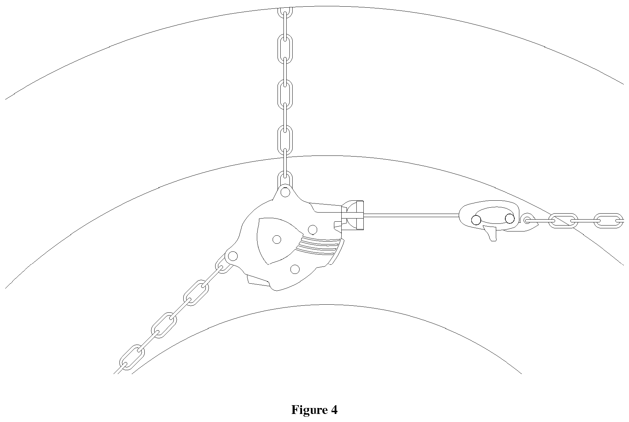

As shown in figure 1 to figure 4, the automatic retracting and locking ratchet wheel lock catch according to the embodiment of this invention comprises a housing 100, a rotating wheel 200, an energy storage spring 300, a steel rope 400, a locking buckle 500, a first button 600, a second button 700.

Specifically, the rotating wheel 200 is rotatably mounted on the housing 100, e.g. the housing 100 is formed with a rotating shaft, and the rotating wheel 200 is sleeved on the rotating shaft. Multiple locking ratchets 201 as well as multiple non-return grooves 202 under multiple locking ratchets 201 are evenly arranged on the outer peripheral wall of the rotating wheel along the circumferential direction of the rotating wheel 200.

The energy storage spring 300 is coaxially sleeved in the rotating wheel 200; the first end of the energy storage spring 300 is fixed to the housing 100, while the second end of the energy storage spring 300 is fixed to the rotating wheel 200; the energy storage spring 300 is used to normally drive the rotating wheel 200 to rotate in the first direction.

In other words, assuming that the first direction is clockwise, the energy storage spring 300 normally drives the rotating wheel 200 to drive in a clockwise direction without external force; the rotating wheel 200 without external force overcomes the acting force of the energy storage spring 300 and rotate in the counterclockwise direction.

Similarly, assuming that the first direction is counterclockwise, the energy storage spring 300 normally drives the rotating wheel 200 to drive in a counterclockwise direction without external force; the rotating wheel 200 without external force overcomes the acting force of the energy storage spring 300 and rotate in the clockwise direction.

The steel cable 400 is wound around the outer peripheral wall of the rotating wheel 200. The first end of the steel cable 400 is fixed to the rotating wheel 200, while the second end of the steel cable 400 extends out of the housing 100. Advantageously, the outer peripheral wall of the rotating wheel 200 has an annual groove 210; the steel rope 400 is contained in the annular groove 210. Further, the annular groove 210 may be interposed between multiple locking ratchet wheels 201 and multiple non-return grooves 202.

The locking buckle 500 is pivotally disposed on the housing 100; the first end of the locking buckle has a locking protrusion 510 adapted to any one of the locking ratchets; the second end of the locking buckle has a non-return protrusion 520 adapted to any one of the non-return grooves 202; the locking protrusion 510 and the non-return protrusion 520 are respectively placed on both sides of the pivot point of the locking buckle 500.

The first button 600 is coupled with the first end of the locking buckle 500 (as in the example of figure 2, the right end of the locking buckle 500).

The second button 700 is coupled with the second end of the locking buckle 500 (as in the example of figure 2, the left end of the locking buckle 500).

When the first button 600 is pressed, the second button 700 bounces under the driving of the locking buckle; the locking protrusion 510 is combined with any one of the locking ratchets 201, and the non-return protrusions 520 are disengaged from any one of the non-return grooves 202; the rotating wheel 200 is allowed to rotate in the first direction and prohibited from rotating in the second direction; the steel cable 400 is tightened.

When the second button 700 is pressed, the first button 600 bounces under the driving of the locking buckle 500; the locking protrusion 510 is disengaged from any one of the locking ratchets 201, and the non-return protrusion 520 is combined with any one of the non-return grooves 202; the rotating wheel 200 is allowed to rotate in the second direction and prohibited from rotating in the first direction; the steel cable 500 is pulled out.

Take figure 2 as an example. When the first button 600 is pressed, the second button 700 bounces under the driving of the locking buckle; the locking protrusion 510 is combined with any one of the locking ratchets 201, and the non-return protrusions 520 are disengaged from any one of the non-return grooves 202; the rotating wheel 200 is allowed to rotate in the counterclockwise direction and prohibited from rotating in the clockwise direction; the steel cable 400 is tightened.

When the second button 700 is pressed, the first button 600 bounces under the driving of the locking buckle 500; the locking protrusion 510 is disengaged from any one of the locking ratchets 201, and the non-return protrusion 520 is combined with any one of the non-return grooves 202; the rotating wheel 200 is allowed to rotate in the clockwise direction and prohibited from rotating in the counterclockwise direction; the steel cable 500 is pulled out.

According to the present invention, the automatic retracting and locking ratchet wheel lock catch also comprises a limit-position buckle 800 and a spring 900. The first end of the spring 900 abuts on the housing 100, while the second end of the spring 900 abuts on the limit-position buckle 800 to normally push the limit-position buckle 800 to be coupled with the first end of the locking buckle 500, so that the locking buckle 500 is positioned at a position where the ratchet 510 is coupled with the rotating wheel 200 or where the ratchet 510 is disengaged from the rotating wheel 200. Advantageously, the automatic retracting and locking wheel lock catch also comprises a first return spring 610 and a second return spring 710; the first end of the first return spring 610 abuts on the first end of the locking buckle 500, while the second end of the first return spring 610 abuts on the first button 600; the first end of the second return spring 710 abuts on the housing 100, while the second end of the second return spring 710 abuts on the second button 700. Therefore, the user only needs to press the first button 600 or the second button 700 once and there is no need to press for a long time; the use is more convenient and quick.

According to some embodiments of the invention, the automatic retracting and locking ratchet wheel lock catch comprises a buckle 1000. The buckle 100 is coupled with the second end of the steel cable 400. Advantageously, the automatic retracting and locking ratchet wheel lock catch also comprises a steel cable sleeve 1100; the steel cable sleeve 1100 is connected to the housing 100; the second end of the steel cable 400 passes through the steel cable sleeve 1100 and is connected to the buckle 1000. Further, the buckle 1000 also comprises a buckle upper cover 1010 and a buckle lower cover 1020; the buckle upper cover 1010 is connected to the buckle lower cover 1020 through a buckle stud 1030.

According to some embodiments of the invention, the housing 100 has a first connecting hole 101 and a second connecting hole 102 for facilitating connection of an anti-skid chain. Advantageously, the housing 100 comprises an upper housing 110 and a lower housing 120; the upper housing 110 is coupled with the lower housing 120 through a housing stud 130. Further, both the upper housing 110 and the lower housing 120 are made of plastic.

The use process of the automatic retracting and locking ratchet wheel lock catch according to the embodiment of this invention will be briefly described below.

Figure 2 shows the initial state of the automatic retracting and locking ratchet wheel lock catch according to the embodiment of this invention. At this time, the locking protrusion 510 is coupled with any one of the locking ratchets 210, while the non-return protrusion 520 is disengaged from any one of the non-return grooves 202; the rotation wheel 200 is allowed to rotate in the counterclockwise direction and prohibited from rotating in the clockwise direction; the steel cable 400 is tightened.

If the user wants to pull out the steel cable 400, the user just needs to press the second button 700; the first button 600 pops up through lever effect; the locking protrusion 510 is disengaged from any one of the locking ratchets 201, and the non-return protrusion 520 is combined with any one of the non-return grooves 202.The user can pull the second end of the steel cable 400 to overcome the acting force of the energy storage spring 300 and pulls the steel cable 400 out of the housing 100; when the pulled steel cable 400 reaches the predetermined length, since the non-stop protrusion 520 is combined with any one of the non-stop grooves 202, the rotating wheel 200 is prohibited from rotating counterclockwise and thus the steel cable 400 will not be tightened. When the user has connected the anti-skid chain, press the first button 600; the locking protrusion 510 is combined with any one of the locking ratchets 201, while the non-return protrusion 520 is disengaged from any one of the non-return grooves 202 to perform one-way locking. If the steel cable pulled out of the housing 100 becomes loose, the steel rope 400 further automatically tightened under the restoring force of the energy storage spring 300.

According to the embodiment of this invention, the automatic retracting and locking ratchet wheel lock catch suits the quick installation of snowfield anti-skid chain buckle of auto and small in size, does not require removal of the gloves, can achieve self-adjustment of chain and self-correction of chain length and is convenient for storage. The concentration of several functions on the snowfield anti-skid buckle device of automobiles not only improves the operation efficiency but also increase the operation accuracy and achieves waterproofness.

In the description of the present invention, it is to be understood that orientation or position relationship indicated by terms "center", "longitudinal", "transverse", "length", "width", "thickness", "upper", "lower", "front", "left", "right", "vertical", "horizontal", "top", "bottom", "inside", "axial", "radial", "circumferential", etc. are the orientation or position relationship based on the attached figures, or merely for the convenience of description of the invention or simplified description, rather than indicating or implying the device or component referred to must have specific orientation or are structured and operated in a particular orientation. Therefore, it is not to be construed as limit to the invention.

Moreover, the terms "first" and "second" are used for descriptive purposes only and are not to be construed as indicating or implying a relative importance implicitly indicating the number of technical characteristics indicated. Thus, the characteristics defined as "first" and "second" may explicitly or implicitly comprise one or more such characteristics. In the description of the present invention, the meaning of "multiple" is two or more, unless otherwise specifically defined.

In the present invention, the terms ""installation", "coupled", "connected", "fixed", etc. shall be understood broadly, unless otherwise specifically defined and limited; for example, it may be either a fixed connection or a detachable connection or integrated, either mechanical connection or electrical connection, either direct coupled or indirect coupled through an intermediate medium, either the internal connection between two components or the interaction between two components. For general technical staff in this field, the specific meanings of the above terms in the present invention can be understood on a case-by-case basis.

In the present invention, unless otherwise specifically defined and limited, the first characteristic "above" or "below" the second characteristic may be in direct contact with the second characteristic, or the first characteristic and the second characteristic are in indirect contact through intermediate medium. Moreover, the first characteristic "above" or "over" the second characteristic may be that the first characteristic is inclined above or right over the second characteristic or merely that the level height of the first characteristic level is lower than that of the second characteristic. The first characteristic "below" or "under" the second characteristic may be that the first characteristic is right under or inclined below the second characteristic, or merely that the level height of the first characteristic level is lower than that of the second characteristic.

In the description, the description with reference to the terms "one implementation embodiment", "some implementation embodiment", "example", "specific example", "some examples" and the like means that specific characteristic, structure, material or characteristic described in connection with the implementation embodiment or example are comprised in at least one implementation embodiment or example. In the description, the schematic representation of the above terms is not necessarily directly to the same embodiment or example. Moreover, the specific characteristics, structures, materials, or characteristics described may be combined in a suitable manner in any one or more embodiments or examples. In addition, various embodiments or examples descried in the specification as well as the characteristics of various embodiment s or examples may be combined or grouped in circumstances where there is no contradiction.

Although the embodiments of the present invention have been shown and described, it is understood that the above-mentioned embodiments are illustrative and are not to be construed as limit to the invention. Changes, modifications, substitutions and variations of the above-mentioned embodiments in the scope of the present invention by general technical staff in this field fall within the protection scope of the the appended claims.

## Claims

1. A ratchet wheel lock catch that automatically shrinks and locks, comprising:
a housing (100);
a rotating wheel (200): the rotating wheel (200) is rotatably mounted on the housing (100); multiple locking ratchets (201) as well as multiple non-return grooves (202) positioned below the multiple locking ratchets (201) are evenly arranged on the outer peripheral wall of the rotating wheel (200) along the circumferential direction of the rotating wheel (200);
an energy storage spring (300): the energy storage spring (300) is coaxially sleeved in the rotating wheel (200); the first end of the energy storage spring (300) is fixed to the housing (100), and the second end of the energy storage spring (300) is fixed to the rotating wheel (200); the energy storage spring (300) is used to normally drive the rotating wheel (200) to rotate in the first direction;
a steel cable (400): the steel cable (400) is wound around the outer peripheral wall of the rotating wheel (200); the first end of the steel cable (400) is fixed to the rotating wheel (200) and the second end of the steel cable (400) extends out of the housing (100);
a locking buckle (500): the locking buckle (500) is pivotally mounted on the housing (100); the first end of the locking buckle (500) has locking protrusions (510) adapted to any of the locking ratchets (201), while the second end has non-return protrusions (520) adapted to any of the non-return grooves (202); the locking protrusions (510) and the non-return protrusions (520) are respectively disposed on both sides of the pivot point of the locking buckle (500);
a first button (600): the first button (600) is coupled with the first end of the locking buckle (500);
a second button (700): the second button (700) is coupled with the second end of the locking buckle (500);
when the first button (600) is pressed, the second button (700) bounces under the driving of the locking buckle (500); the locking protrusion (510) is combined with any one of the locking ratchets (201), and the non-return protrusions (520) are disengaged from any one of the non-return grooves (202); the rotating wheel (200) is allowed to rotate in the first direction and prohibited from rotating in the second direction; the steel cable (400) is tightened;
when the second button (700) is pressed, the first button (600) bounces under the driving of the locking buckle (500); the locking protrusion (510) is disengaged from any one of the locking ratchets (201), and the non-return protrusion (520) is combined with any one of the non-return grooves (202); the rotating wheel (200) is allowed to rotate in the second direction and prohibited from rotating in the first direction; the steel cable (400) is pulled out;
the ratchet wheel lock catch is **characterized in that**, the ratchet wheel lock catch also comprises a limit-position buckle (800) and a spring (900), the first end of the spring (900) abuts on the housing (100), while the second end of the spring (900) abuts on the limit-position buckle (800) to push the limit-position buckle (800) to be coupled with the first end of the locking buckle (500), so that the locking buckle (500) is positioned at a position where the locking protrusion (510) is coupled with the rotating wheel or where the locking protrusion (510) is disengaged from the rotating wheel (200).

2. The automatic shrinking and locking ratchet wheel lock catch as claimed in claim 1, **characterized in that** it also comprises a first return spring (610) and a second return spring (710); the first end of the first return spring (610) abuts on the first end of the locking buckle (500), while the second end of the first return spring (610) abuts on the first button (600); the first end of the second return spring (710) abuts on the housing (100), while the second end of the second return spring (710) abuts on the second button (700).

3. The automatic shrinking and locking ratchet wheel lock catch as claimed in claim 1, **characterized in that** it also comprises a buckle (1000); the buckle (1000) is coupled with the second end of the steel cable (400).

4. The automatic shrinking and locking ratchet wheel lock catch as claimed in claim 3, **characterized in that** it also comprises a steel cable sleeve (1100); the steel cable sleeve (1100) is coupled with the housing (100); the second end of the steel cable (400) passes through the steel cable sleeve (1100) and coupled with the buckle (1000).

5. The automatic shrinking and locking ratchet wheel lock catch as claimed in claim 3, **characterized in that** the housing (100) has a first connecting hole (101) and a second connecting hole (102).

6. The automatic shrinking and locking ratchet wheel lock catch as claimed in claim 3, **characterized in that** the buckle (1000) comprises a buckle upper cover (1010) and a buckle lower cover (1020); the buckle upper cover (1010) is coupled with the buckle lower cover (1020) with a buckle stud (1030).

7. The automatic shrinking and locking ratchet wheel lock catch as claimed in claim 1, **characterized in that** the housing (100) comprises a upper housing (110) and a lower housing (120); the upper housing (110) is coupled with the lower housing (120) through a housing stud (130).

8. The automatic shrinking and locking ratchet wheel lock catch as claimed in claim 7, **characterized in that** both the upper housing (110) and lower housing (120) are made of plastic.

9. The automatic shrinking and locking ratchet wheel lock catch as claimed in claim 1, **characterized in that** the outer peripheral wall of the rotating wheel (200) has an annular groove (210); the steel cable (400) is contained in the annular groove (210).

## Patentansprüche

1. - Sperrradschloss-Schnappverschluss, der automatisch kleiner wird und verschließt, umfassend:
ein Gehäuse (100);
ein rotierendes Rad (200): das rotierende Rad (200) ist rotierend auf dem Gehäuse (100) montiert; zahlreiche verriegelnde Sperren (201), ebenso wie zahlreiche Rückschlagnuten (202), positioniert unter den zahlreichen verriegelnden Sperren (201), sind gleichförmig auf der äußeren Umfangswand des rotierenden Rads (200) entlang der Umfangsrichtung des rotierenden Rads (200) angeordnet;
eine Energiespeicherfeder (300): die Energiespeicherfeder (300) ist koaxial im rotierenden Rad (200) eingesetzt; das erste Ende der Energiespeicherfeder (300) ist an das Gehäuse (100) befestigt, und das zweite Ende der Energiespeicherfeder (300) ist an das rotierende Rad (200) befestigt; die Energiespeicherfeder (300) wird verwendet, um das rotierende Rad (200) normal anzutreiben, um in der ersten Richtung zu rotieren;
ein Stahlkabel (400): das Stahlkabel (400) ist um die äußere Umfangswand des rotierenden Rads (200) gewunden; das erste Ende des Stahlkabels (400) ist an das rotierende Rad (200) befestigt, und das zweite Ende des Stahlkabels (400) erstreckt sich aus dem Gehäuse (100);
eine Verriegelungsschnalle (500): die Verriegelungsschnalle (500) ist schwenkend auf das Gehäuse (100) montiert; das erste Ende der Verriegelungsschnalle (500) weist Verriegelungsvorsprünge (510) auf, die an jede der Verriegelungssperren (201) angepasst sind, während das zweite Ende Rückschlagvorsprünge (520) aufweist, die an eine die Rückschlagnuten (202) angepasst sind; die Verriegelungsvorsprünge (510) und die Rückschlagvorsprünge (520) sind jeweils auf beiden Seiten des Schwenkpunkts der Verriegelungsschnalle (500) angeordnet;
einen ersten Knopf (600): der erste Knopf (600) ist mit dem ersten Ende der Verriegelungsschnalle (500) gekoppelt;
einen zweiten Knopf (700): der zweite Knopf (700) ist mit dem zweiten Ende der Verriegelungsschnalle (500) gekoppelt;
wenn der erste Knopf (600) gedrückt wird, federt der zweite Knopf (700) unter dem Antrieb der Verriegelungsschnalle (500); der Verriegelungsvorsprung (510) ist mit einer der Verriegelungssperren (201) kombiniert, und die Rückschlagvorsprünge (520) sind von einem der Rückschlagnuten (202) gelöst; dem rotierenden Rad (200) wird ermöglicht, in der ersten Richtung zu rotieren, und es wird daran gehindert, in der zweiten Richtung zu rotieren; das Stahlkabel (400) wird gespannt;
wenn der zweite Knopf (700) gedrückt wird, federt der erste Knopf (600) unter dem Antrieb der Verriegelungsschnalle (500); der Verriegelungsvorsprung (510) wird von einem der Verriegelungsriegel (201) gelöst, und der Rückschlagvorsprung (520) wird mit einer der Rückschlagnuten (202) kombiniert; dem rotierenden Rad (200) wird ermöglicht, in der zweiten Richtung zu rotieren, und es wird daran gehindert, in der ersten Richtung zu rotieren; das Stahlkabel (400) wird herausgezogen;
der Sperrradschloss-Schnappverschluss ist **dadurch gekennzeichnet, dass** der Sperrradschloss-Schnappverschluss auch eine Grenzpositions-Schnalle (800) und eine Feder (900) umfasst, das erste Ende der Feder (900) an das Gehäuse (100) stößt, während das zweite Ende der Feder (900) an die Grenzpositions-Schnalle (800) stößt, um die Grenzpositions-Schnalle (800) zu schieben, um mit dem ersten Ende der Verschlussschnalle (500) gekoppelt zu werden, so dass die Verriegelungsschnalle (500) an einer Stelle positioniert ist, an der der Verriegelungsvorsprung (510) mit dem rotierenden Rad gekoppelt ist, oder an der der Verriegelungsvorsprung (510) vom rotierenden Rad (200) gelöst ist.

2. - Automatisch kleiner werdender und verriegelnder Sperrradschloss-Schnappverschluss nach Anspruch 1, **dadurch gekennzeichnet, dass** er auch eine erste Rückstellfeder (610) und eine zweite Rückstellfeder (710) umfasst; das erste Ende der Rückstellfeder (610) an das erste Ende der Verriegelungsschnalle (500) stößt, während das zweite Ende der ersten Rückstellfeder (610) an den ersten Knopf (600) stößt; das erste Ende der zweiten Rückstellfeder (710) an das Gehäuse (100) stößt, während das zweite Ende der zweiten Rückstellfeder (710) an den zweiten Knopf (700) stößt.

3. - Automatisch kleiner werdender und verriegelnder Sperrradschloss-Schnappverschluss nach Anspruch 1, **dadurch gekennzeichnet, dass** er auch eine Schnalle (1000) umfasst; die Schnalle (1000) mit dem zweiten Ende des Stahlkabels (400) gekoppelt ist.

4. - Automatisch kleiner werdender und verriegelnder Sperrradschloss-Schnappverschluss nach Anspruch 3, **dadurch gekennzeichnet, dass** er auch eine Stahlkabelhülse (1100) umfasst; die Stahlkabelhülse (1100) mit dem Gehäuse (100) gekoppelt ist; das zweite Ende des Stahlkabels (400) durch die Stahlkabelhülse (1100) verläuft und mit der Schnalle (1000) gekoppelt ist.

5. - Automatisch kleiner werdender und verriegelnder Sperrradschloss-Schappverschluss nach Anspruch 3, **dadurch gekennzeichnet, dass** das Gehäuse (100) ein erstes Verbindungsloch (101) und ein zweites Verbindungsloch (102) aufweist.

6. - Automatisch kleiner werdender und verriegelnder Sperrradschloss-Schnappverschluss nach Anspruch 3, **dadurch gekennzeichnet, dass** die Schnalle (1000) eine obere Schnallenabdeckung (1010) und eine untere Schnallenabdeckung (1020) umfasst; die obere Schnallenabdeckung (1010) mit der unteren Schnallenabdeckung (1020) durch einen Schnallenbolzen (1030) gekoppelt ist.

7. - Automatisch kleiner werdender und verriegelnder Sperrradschloss-Schnappverschluss nach Anspruch 1, **dadurch gekennzeichnet, dass** das Gehäuse (100) ein oberes Gehäuse (110) und ein unteres Gehäuse (120) umfasst; das obere Gehäuse (110) mit dem unteren Gehäuse (120) durch einen Gehäusebolzen (130) gekoppelt ist.

8. - Automatisch kleiner werdender und verriegelnder Sperrradschloss-Schnappverschluss nach Anspruch 7, **dadurch gekennzeichnet, dass** sowohl das obere Gehäuse (110) als auch das untere Gehäuse (120) aus Plastik hergestellt sind.

9. - Automatisch kleiner werdender und verriegelnder Sperrradschloss-Schnappverschluss nach Anspruch 1, **dadurch gekennzeichnet, dass** die äußere Umfangswand des rotierenden Rads (200) eine ringförmige Nut (210) aufweist; das Stahlkabel (400) in der ringförmigen Nut (210) enthalten ist.

## Revendications

1. - Verrou à roue à rochet qui se rétracte et se verrouille automatiquement, comprenant :
un boîtier (100) ;
une roue rotative (200) : la roue rotative (200) est montée de manière rotative sur le boîtier (100) ; de multiples rochets de verrouillage (201), ainsi que de multiples rainures de non-retour (202) positionnées sous les multiples rochets de verrouillage (201), sont disposés de manière régulière sur la paroi périphérique extérieure de la roue rotative (200) le long de la direction circonférentielle de la roue rotative (200) ;
un ressort de stockage d'énergie (300) : le ressort de stockage d'énergie (300) est enchâssé coaxialement dans la roue rotative (200) ; la première extrémité du ressort de stockage d'énergie (300) est fixée au boîtier (100), et la seconde extrémité du ressort de stockage d'énergie (300) est fixée à la roue rotative (200) ; le ressort de stockage d'énergie (300) est utilisé pour entraîner normalement la roue rotative (200) en rotation dans le premier sens ;
un câble d'acier (400) : le câble d'acier (400) est enroulé autour de la paroi périphérique extérieure de la roue rotative (200) ; la première extrémité du câble d'acier (400) est fixée à la roue rotative (200) et la seconde extrémité du câble d'acier (400) s'étend hors du boîtier (100) ;
une boucle de verrouillage (500) : la boucle de verrouillage (500) est montée de manière pivotante sur le boîtier (100) ; la première extrémité de la boucle de verrouillage (500) a des saillies de verrouillage (510) adaptées à l'un quelconque des rochets de verrouillage (201), tandis que la seconde extrémité a des saillies de non-retour (520) adaptées à l'une quelconque des rainures de non-retour (202) ; les saillies de verrouillage (510) et les saillies de non-retour (520) sont respectivement disposées sur les deux côtés du point de pivotement de la boucle de verrouillage (500) ;
un premier bouton (600) : le premier bouton (600) est accouplé à la première extrémité de la boucle de verrouillage (500) ;
un second bouton (700) : le second bouton (700) est accouplé à la seconde extrémité de la boucle de verrouillage (500) ;
lorsque le premier bouton (600) est enfoncé, le second bouton (700) rebondit sous l'effet de l'entraînement de la boucle de verrouillage (500) ; la saillie de verrouillage (510) est combinée à l'un quelconque des rochets de verrouillage (201), et les saillies de non-retour (520) sont désengagées de toutes les rainures de non-retour (202) ; la roue rotative (200) est autorisée à tourner dans le premier sens et empêchée de tourner dans le second sens ; le câble d'acier (400) est tendu ;
lorsque le second bouton (700) est enfoncé, le premier bouton (600) rebondit sous l'effet de l'entraînement de la boucle de verrouillage (500) ; la saillie de verrouillage (510) est désengagée de tout rochet de verrouillage (201), et la saillie de non-retour (520) est combinée à l'une quelconque des rainures de non-retour (202) ; la roue rotative (200) est autorisée à tourner dans le second sens et empêchée de tourner dans le premier sens ; le câble d'acier (400) est extrait ;
le verrou à roue à rochet est **caractérisé par le fait que** le verrou à roue à rochet comprend également une boucle de position limite (800) et un ressort (900), la première extrémité du ressort (900) est en appui sur le boîtier (100), tandis que la seconde extrémité du ressort (900) est en appui sur la boucle de position limite (800) pour pousser la boucle de position limite (800) à s'accoupler à la première extrémité de la boucle de verrouillage (500), de telle sorte que la boucle de verrouillage (500) est positionnée à une position dans laquelle la saillie de verrouillage (510) est accouplée à la roue rotative ou dans laquelle la saillie de verrouillage (510) est désengagée de la roue rotative (200) .

2. - Verrou à roue à rochet à rétractation et verrouillage automatiques selon la revendication 1, **caractérisé par le fait qu'**il comprend également un premier ressort de rappel (610) et un second ressort de rappel (710) ; la première extrémité du premier ressort de rappel (610) est en appui sur la première extrémité de la boucle de verrouillage (500), tandis que la seconde extrémité du premier ressort de rappel (610) est en appui sur le premier bouton (600) ; la première extrémité du second ressort de rappel (710) est en appui sur le boîtier (100), tandis que la seconde extrémité du second ressort de rappel (710) est en appui sur le second bouton (700).

3. - Verrou à roue à rochet à rétractation et verrouillage automatiques selon la revendication 1, **caractérisé par le fait qu'**il comprend également une boucle (1000) ; la boucle (1000) est accouplée à la seconde extrémité du câble d'acier (400).

4. - Verrou à roue à rochet à rétractation et verrouillage automatiques selon la revendication 3, **caractérisé par le fait qu'**il comprend également un manchon de câble d'acier (1100) ; le manchon de câble d'acier (1100) est accouplé au boîtier (100) ; la seconde extrémité du câble d'acier (400) passe à travers le manchon de câble d'acier (1100) et est accouplée à la boucle (1000).

5. - Verrou à roue à rochet à rétractation et verrouillage automatiques selon la revendication 3, **caractérisé par le fait que** le boîtier (100) a un premier trou de liaison (101) et un second trou de liaison (102).

6. - Verrou à roue à rochet à rétractation et verrouillage automatiques selon la revendication 3, **caractérisé par le fait que** la boucle (1000) comprend un couvercle supérieur de boucle (1010) et un couvercle inférieur de boucle (1020) ; le couvercle supérieur de boucle (1010) est accouplé au couvercle inférieur de boucle (1020) par un goujon de boucle (1030).

7. - Verrou à roue à rochet à rétractation et verrouillage automatiques selon la revendication 1, **caractérisé par le fait que** le boîtier (100) comprend un boîtier supérieur (110) et un boîtier inférieur (120) ; le boîtier supérieur (110) est accouplé au boîtier inférieur (120) par un goujon de boîtier (130).

8. - Verrou à roue à rochet à rétractation et verrouillage automatiques selon la revendication 7, **caractérisé par le fait que** le boîtier supérieur (110) et le boîtier inférieur (120) sont tous deux faits de matière plastique.

9. - Verrou à roue à rochet à rétractation et verrouillage automatiques selon la revendication 1, **caractérisé par le fait que** la paroi périphérique extérieure de la roue rotative (200) a une rainure annulaire (210) ; le câble d'acier (400) est contenu dans la rainure annulaire (210).
